# EUROPÄISCHE PATENTSCHRIFT

(11) **EP 1 564 452 B1**
(45) Veröffentlichungstag und Bekanntmachung des Hinweises auf die Patenterteilung: **14.06.2006**
(21) Anmeldenummer: 05001642.7
(22) Anmeldetag: 27.01.2005
(51) Int. Cl.: F16J 15/06, B60J 10/00

(54) **Dichtleiste**
Sealing strip
Bande d'étanchéité

(30) Priorität: 13.02.2004 DE 202004002241 U
(43) Veröffentlichungstag der Anmeldung: 17.08.2005
(73) Patentinhaber: Meteor Gummiwerke K.H. Bädje GmbH & Co. KG, 31167 Bockenem (DE)
(72) Erfinder: Wolf, Alexander, 31085 Everode (DE)
(74) Vertreter: Sobisch, Peter

(56) Entgegenhaltungen:
- EP-A- 1 502 844
- WO-A-99/26801

## Beschreibung

Die Erfindung bezieht sich auf eine Dichtleiste entsprechend dem Oberbegriff des Anspruchs 1.

Anwendungen finden derartige Dichtleisten nicht nur im Fahrzeugbau sondern auch in zahlreichen anderen Bereichen des Maschinen- und Gerätebaues, wo immer es um das Problem geht, einen zwischen zwei, relativ zueinander bewegbaren Teilen bestehenden Spalt dadurch dichtend zu schließen, dass die Dichtleiste mit dem einen der beiden Teile verbunden wird und während des Dichtungszustands unter Anlage an dem anderen Teil elastisch verpresst ist.

Die Verbindung mit dem einen Teil kann bei entsprechender Ausgestaltung der Dichtleiste formschlüssig durch elastische Verrastung erfolgen - häufig ist jedoch eine Verklebung vorgesehen. Zu diesem Zweck besteht die Dichtleiste regelmäßig aus einer, die eigentliche Dichtungswirkung vermittelnden Schicht, die auf einer Seite mit einer Klebstoffschicht überzogen ist, wobei die Klebstoffschicht Ihrerseits mit einer Abdeckfolie belegt ist.

Sämtliche dieser Schichten sind stofflich aufeinander und funktionell mit Hinblick auf die zu erzielende Dichtwirkung hin abgestimmt. Insbesondere ist die Abdeckfolie dahingehend eingerichtet, dass eine Verklebung mit dem abgedeckten Klebstoff nicht eintritt, so dass der Klebstoff infolge der Abdeckung in einem inaktivierten, jedoch nach Entfernen der Abdeckfolie einsetzfähigen Zustand gehalten ist. Soweit diese Bedingungen gegeben sind, kann grundsätzlich jeder beliebige physikalisch abbindende bzw. chemisch reagierende kalt- oder warmaushärtende Klebstoff Verwendung finden.

Es ist bekannt, derartige Dichtleisten zur Erleichterung der Handhabung während der Montage mit Abreißlaschen zu versehen, die den Zweck haben, ein manuelles Erfassen der Abdeckfolie zwecks Entfernens unmittelbar vor der Montage zu ermöglichen. Um die Dichtleiste in einen einbaufertigen Zustand zu versetzen, ist diese im Ausgangszustand zunächst einmal auf die benötigte Länge zuzuschneiden und anschließend mit wenigstens einer solchen Abreißfolie zu versehen. Diese wird hierbei üblicherweise auf die Außenseite der Abdeckfolie geklebt.

Im Fahrzeugbau kommen derartige Dichtleisten in sehr großem Umfang zum Einsatz, so dass bereits der Materialbedarf für die Bereitstellung der Abreißlaschen, die beispielsweise aus Polyethylen bestehen, beträchtlich ist. Zu diesen treten die durch die Verbindung der Laschen mit der Dichtleisten veranlassten Arbeitskosten hinzu.

Der Einbau dieser Dichtleisten erfolgt häufig unter räumlich beengten Verhältnissen, insbesondere jedoch auch an schwer zugänglichen Stellen. Nachdem die Substanz der genannten Abdeckfolie mit der Maßgabe gewählt ist, dass sie für Verklebungen nur bedingt bzw. kaum geeignet ist, ist ein Lösen der Verbindung zwischen der Abdeckfolie und der Abreißlasche nicht sicher auszuschließen, so dass sich der Montagevorgang unter Umständen außerordentlich mühsam gestalten kann, da nach Lösen der genannten Verbindung die Abdeckfolie in sonstiger Weise von der Klebstoffschicht gelöst werden muss.

Es ist vor diesem Hintergrund die Aufgabe der Erfindung, eine Dichtleiste der eingangs bezeichneten Art (wie z.B. in Dokument WO99/26801 beschrieben) dahingehend auszugestalten, dass bei beträchtlich vermindertem Materialeinsatz ein rationelleres Arbeiten und insbesondere eine sichere Handhabung bei der Montage gegeben ist. Gelöst ist diese Aufgabe bei einer solchen Dichtleiste durch die Merkmale des Kennzeichnungsteils des Anspruchs 1.

Erfindungswesentlich ist hiernach, dass das Hilfsmittel, welches zur manuellen Ablösung der Abdeckfolie bestimmt ist, durch lediglich einen Reißfaden gebildet ist, der in die Substanz der Abdeckfolie eingesetzt bzw. in dieser verankert ist. Der Faden ist dahingehend dimensioniert und werkstofflich gewählt, dass er zur Übertragung der Kraft geeignet ist, die zum Ablösen der Abdeckfolie ausreichend ist. Dementsprechend ist auch die Verbindung zwischen dem Faden und der Abdeckfolie eingerichtet. Im Vergleich zu dem eingangs dargelegten Stand der Technik ergibt sich für dieses Hilfsmittel, welches vorzugsweise aus Kunststoff besteht, ein bedeutend geringerer Materialeinsatz und infolge einer formschlüssigen Verbindung mit der Abdeckfolie eine größere Betriebssicherheit. Entlang der Dichtungsleiste können ein oder auch mehrere Abreißfäden vorgesehen sein.

Der Reißfaden ist entsprechend den Merkmalen des Anspruchs 2 an beiden Enden mit flächigen Halteelementen versehen. Nachdem der Reißfaden die Substanz der Abdeckfolie durchdringt, bilden diese flächigen Halteelemente gleichzeitig Verankerungslemente, auf denen letztendlich der formschlüssige Verbund mit der Abdeckfolie beruhen kann. Diese flächigen Halteelemente können beispielsweise in der Form von rechteckigen Plättchen, jedoch auch von Querriegeln vorliegen, die senkrecht zur Längserstreckung des Reißfadens verlaufen.

Der Vorgang des Herstellens einer Verbindung zwischen den Reißfäden und der Abdeckfolie kann entsprechend den Merkmalen des Anspruchs 3 mechanisiert durch Einpressen oder auch Einschießen durchgeführt werden. Auch ist auf diese Weise kontrollierbar, dass der Reißfaden lediglich die Substanz der Abdeckfolie, nicht hingegen andere Schichten der Dichtleisten durchdringt.

Die, die Sichtfläche der Dichtleiste bildende Schicht kann entsprechend den Merkmalen des Anspruchs 4 beispielsweise aus Gummi oder einem sonstigen Elastomer bestehen, welches auch in einer schaumartigen Konsistenz eingesetzt werden kann, wohingegen die Klebstoffschicht aus Acrylschaum besteht. Die Erfindung kann jedoch grundsätzlich bei jeglichen Dichtleisten Anwendung finden, die zur Montage mit einer, durch eine Abdeckfolie überdeckten Klebstoffschicht vorbereitet sind, und zwar unabhängig von dem Klebsystem bzw. der stofflichen Zusammensetzung der Klebstoffschicht.

Die Dichtleiste kann entsprechend den Merkmalen der Ansprüche 5 und 6 in einer linearen, jedoch auch einer ringförmigen Struktur für den Anwender bereitgestellt werden und ist in jedem Fall mit einem oder mehreren Reißfäden bestückt. Sie bietet gegenüber dem eingangs dargelegten Stand der Technik beträchtliche Vorteile hinsichtlich ihrer Herstellungskosten, insbesondere jedoch auch hinsichtlich ihrer praktischen Handhabungseigenschaften während der Montage.

Die Erfindung wird im Folgenden unter Bezugnahme auf das in den Zeichnungen wiedergegebene Ausführungsbeispiel und das dem Stand der Technik zuzuordnende Ausführungsbeispiel näher erläutert werden. Es zeigen:
Fig. 1 eine Querschnittsdarstellung einer erfindungsgemäßen Dichtleiste;
Fig. 2 eine Querschnittsdarstellung ähnlich derjenigen der Fig. 1 vor dem Einsetzen eines Reißfadens;
Fig. 3 eine Darstellung der unter Verwendung des Reißfadens abgelösten Abdeckfolie einer erfindungsgemäßen Dichtleiste im Querschnitt;
Fig. 4 eine Darstellung einer dem Stand der Technik zuzuordnenden vergleichbaren Dichtleiste;
Fig. 5 eine Darstellung einer linearen Struktur einer Dichtleiste;
Fig. 6 eine Darstellung einer ringförmigen Struktur einer Dichtleiste.

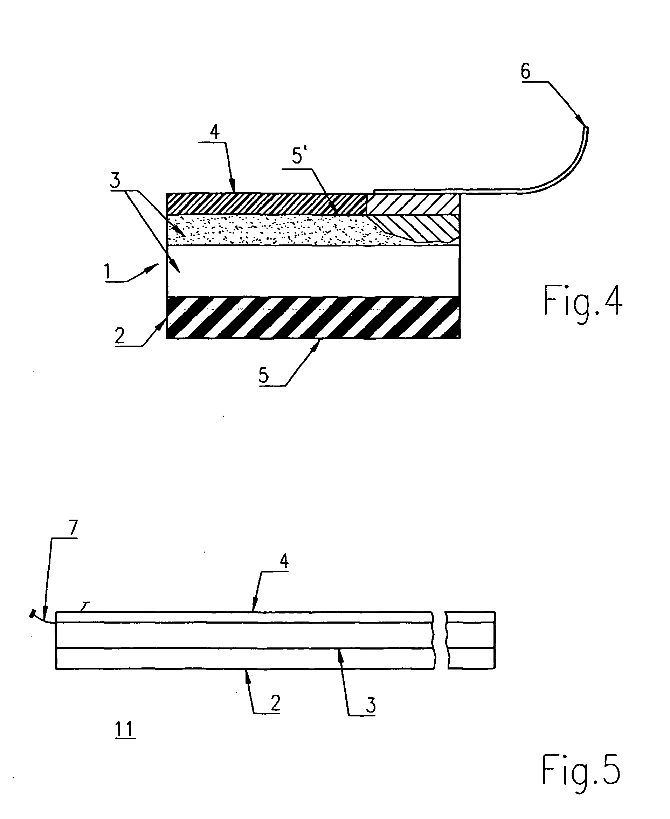

Im Folgenden wird zunächst auf die, dem Stand der Technik zuzuordnende Dichtleiste gemäß Fig. 4 Bezug genommen.

Diese zeigt eine zur Verwendung im Automobilbereich bestimmte Dichtleiste 1, welche einen schichtenartigen Aufbau aufweist. So ist mit 2 eine aus Gummi bestehenden äußere Schicht bezeichnet, deren eine Seite mit einer Schicht 3 bestehend aus einem Kaltkleber wie z.B. Acrylschaum belegt ist, wobei eine Abdeckfolie 4 die Schicht 3 zur Außenseite hin überdeckt.

Die Abdeckfolie 4 ist in an sich bekannter Weise entweder werkstofflich oder infolge ihrer Oberflächenbeschichtung in Abstimmung mit dem Klebstoffsystem der Schicht 3 dahingehend gewählt, dass diese keine dauerhafte Verbindung bzw. Verklebung mit der Schicht 3 eingeht und jedenfalls von dieser lösbar ist.

Eine solche, im Querschnitt - wie der Zeichnung entnehmbar ist - rechteckförmige Dichtungsleiste liegt im Ausgangszustand als Endlosware in der Form einer aufgewickelten Rolle vor, wobei durch die Abdeckfolie 4 ein Verkleben der einzelnen Windungen der Rolle miteinander verhindert wird. Ausgehend von dieser Rolle werden nunmehr diskrete Längenelemente abgewickelt und einer konkreten Anwendung zugeführt, welche dadurch gekennzeichnet ist, dass zunächst die Abdeckfolie 4 zu entfernen ist und dass eine Klebeverbindung zwischen der Schicht 3 und einem Strukturelement eines Fahrzeugs hergestellt wird. Im montierten Zustand bildet somit die äußere Fläche 5 der Schicht 2 eine Sichtfläche bzw. den Teil der Dichtleiste 1, der unter elastischer Verpressung zur dichtenden Anlage an einem gegenüberliegenden Strukturelement eines Fahrzeugs bestimmt ist. Mit 5' ist somit die, zur Verklebung bestimmte Fläche bezeichnet, die erst unmittelbar vor der Montage der Dichtleiste freigelegt wird.

In Abhängigkeit von dem konkreten Anwendungsfall werden derartige Dichtleisten 1 nach Maßgabe bestimmter Längen zugeschnitten, wobei entlang der Dichtleiste 1 eine oder mehrere Abreißlaschen 6 vorgesehen sind. Diese Abreißlaschen können beispielsweise aus Polyethylen bestehen und müssen individuell mit der Außenseite der Abdeckfolie 4 verklebt werden. Diese Verklebung muss derart beschaffen sein, dass über ein Erfassen der Abreißlasche 6 ein Abziehen der Abdeckfolie 4 zwecks Freilegens der Schicht 3 möglich ist und es weisen diese Abreißlaschen regelmäßig eine solche flächenhafte Erstreckung, welche ein bequemes manuelles Erfassen ermöglicht.

Wie eingangs bereits erwähnt, bilden diese Abreißlaschen aufgrund ihrer Materialkosten einerseits jedoch auch aufgrund ihres Auftragens auf die Abdeckfolie durch Verklebung einen nicht zu unterschätzenden, die Herstellungskosten einer einsatzfähigen Dichtleiste belastenden Umstand.

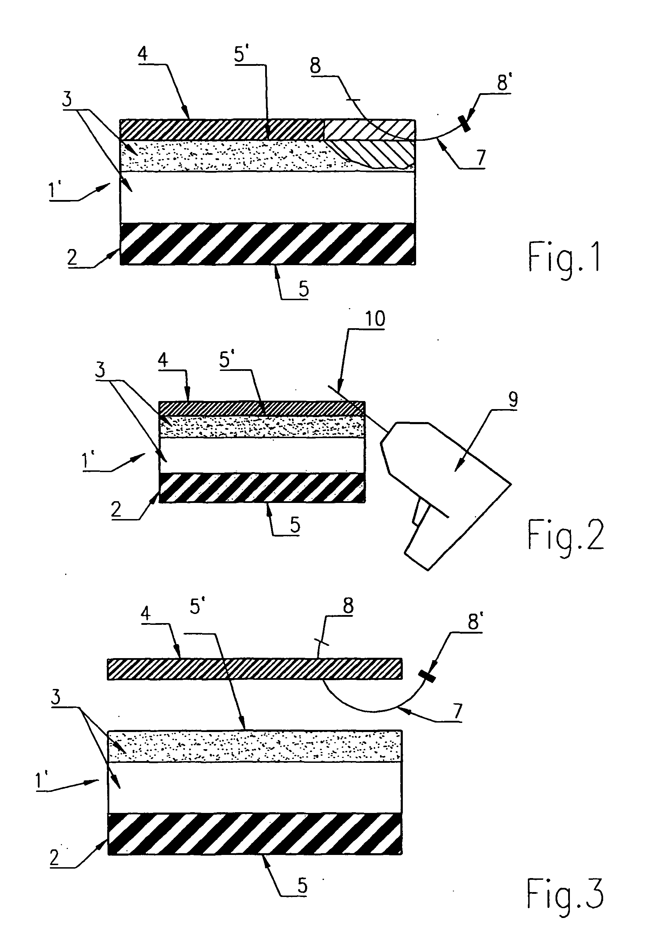

Zur Behebung dieses und weiterer Nachteile wird die erfindungsgemäße, in den Fig. 1 bis 6 von ihrem Aufbau und ihrer Handhabung her beschriebene Dichtleiste 1' vorgeschlagen. Diese weist von ihrer Schichtenfolge her einen ähnlichen Aufbau wie die Dichtleiste 1 gemäß Fig. 4 auf, so dass vergleichbare Funktionselemente beider Dichtleisten 1, 1' identisch bezeichnet sind und insoweit auf eine wiederholte Beschreibung verzichtet werden kann.

Die Dichtleiste 1' liegt im Ausgangszustand in gleicher Weise in einer aufgewickelten Form vor und wird - von diesem Zustand ausgehend - nach Maßgabe diskreter Längenelemente abgewickelt, deren jedes erfindungsgemäß nunmehr mit wenigstens einem Reißfaden 7 versehen wird. Der beispielsweise aus Polyethylen bestehende Reißfaden 7 erstreckt durch die Substanz der Abdeckfolie 4 hindurch und ist an seinen beiden, aus dieser herausragenden Enden mit Haken, Erweiterungen oder sonstigen vorzugsweisen flächigen Halteelementen 8, 8' versehen, welche jedenfalls einem einfachen Herausziehen des Reißfadens 7 aus der Substanz der Abdeckfolie formschlüssig entgegenstehen. Auch weisen diese Halteelemente 8, 8' eine solche Größe und/oder Beschaffenheit auf, welche ein manuelles Erfassen und in der Folge ein Ablösen der Abdeckfolie 4 von der Schicht 3 ermöglichen.

Zum Einführen des Reißfadens 7 dient ein an sich bekanntes Heftgerät 9, welches mit einer Setznadel 10 ausgerüstet ist.

Zum Einbringen der einzelnen Reißfäden 7 wird die Setznadel 10 - wie in Fig. 2 schematisch gezeigt - seitlich durch die Substanz der Abreißlasche 6 hindurch gestoßen, wobei mittels dieser Nadel anschließend ein Reißfaden 7 unter Zurückziehen der Setznadel 10 eingesetzt wird. Der Reißfaden 7 zeigt nach dem Setzen eine schematisch in Fig. 1 gezeigte Lage, wobei entlang eines vorgeschnittenen Längenelements der Dichtleiste 1' wenigstens ein, vorzugsweise mehrere, voneinander beabstandete Reißfäden 7 gesetzt werden können.

Der praktische Gebrauch einer erfindungsgemäßen Dichtleiste 1' gestaltet sich ähnlich wie derjenige der Dichtleiste 1 gemäß Fig. 4. Das heißt es wird durch manuelles Erfassen eines der beiden Halteelemente 8, 8' des Reißfadens 7 die Abdeckfolie 4 von der Schicht 3 entfernt, so dass letztere freigelegt wird und damit zur Verklebung mit einer Gegenfläche einer Kraftfahrzeugstruktur bereitgestellt wird.

Die erfindungsgemäße, mit Reißfäden 7 bestückte Dichtleiste 1' zeichnet sich im Vergleich zu dem eingangs dargelegten Stand der Technik durch eine äußerst einfache Herstellbarkeit aus, nachdem das Setzen der Reißfäden 7 durch Einschießen mittels des Heftgerätes 9, somit in kürzester Zeit durchführbar ist. Hinzu tritt, dass der Materialaufwand für die Bereitstellung von Reißfäden im Vergleich zu den bekannten Abreißlaschen bedeutend geringer ausfällt.

In der erfindungsgemäß mit Reißfäden 7 ausgerüsteten Dichtleiste 1' steht somit ein äußerst zuverlässig handhabbares, sich durch geringe Herstellungskosten auszeichnendes Bauelement zur Verfügung, welches besonders vorteilhaft im Automobilbau eingesetzt werden kann.

Die Erfindung ist jedoch nicht auf den Automobilbau beschränkt und kann grundsätzlich in beliebigen technischen Funktionszusammenhängen eingesetzt werden, wo immer es um Dichtungen von Spalten geht.

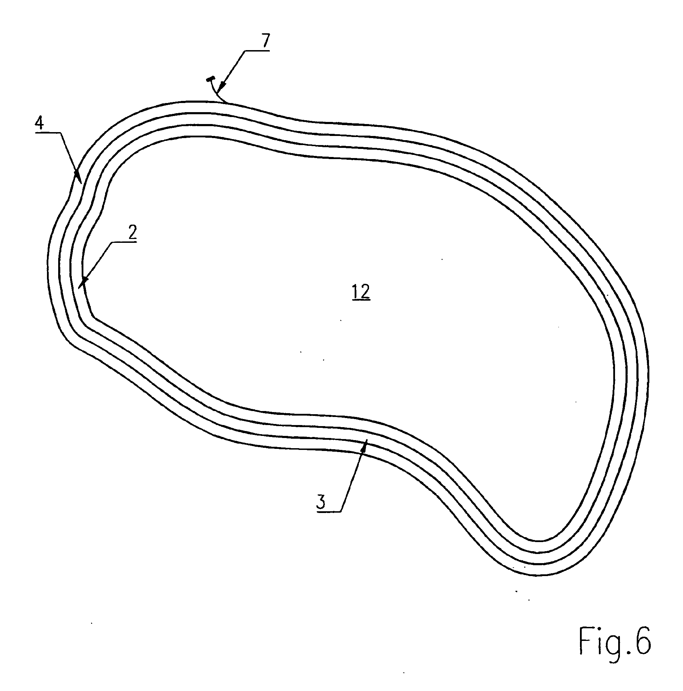

Die Fig. 5 und 6 zeigen jeweils lineare bzw. ringförmige Strukturen erfindungsgemäßer Dichtleisten 11, 12 so wie sie anwenderseitig bereitgestellt werden können.

## Patentansprüche

1. Dichtleiste (1') zum Abdichten des Spaltes zwischen zwei relativ zueinander bewegbaren Teilen, insbesondere des Spaltes zwischen einer Kraftfahrzeugtür und der dieser zugeordneten Berandung einer Fahrzeugstruktur, mit einer zur Verklebung mit dem einen der beiden Teile bestimmten Fläche (5') sowie einer, in der Schließstellung für eine dichtende Anlage an dem anderen der beiden Teile bestimmten und ansonsten eine Sichtfläche darstellenden Fläche (5), bestehend zumindest aus einer, die Sichtfläche bildenden Schicht (2), deren der Fläche (5) abgekehrte Seite mit einer Schicht (3) aus einem Klebstoff überzogen ist, die ihrerseits mit einer, den Klebstoff in einem aktivierbaren Zustand haltenden, von diesem lösbaren, insbesondere nicht mit diesem verklebbarer Abdeckfolie (4) belegt ist und wobei an der Abdeckfolie (4) zumindest ein zu deren manueller Ablösung von der Schicht (3) bestimmtes Hilfsmittel befestigt ist, **dadurch gekennzeichnet, dass** das Hilfsmittel aus wenigstens einem, lediglich die Substanz der Abdeckfolie (4) durchdringenden sowie mit dieser in Verbindung stehenden Reißfaden (7) gebildet ist, dessen wenigstens eines freies Ende aus der Dichtleiste (1') herausragt.

2. Dichtleiste (1') nach Anspruch 1, **dadurch gekennzeichnet, dass** beide Enden des Reißfadens (7) aus der Substanz der Abdeckfolie (4) herausragen und an ihren Enden bzw. auf ihren aus der Substanz herausragenden Abschnitten mit flächigen Halteelementen (8, 8') versehen sind.

3. Dichtleiste (1') nach Anspruch 1 oder 2, **dadurch gekennzeichnet, dass** die Reißfäden (7) aus Kunststoff bestehende, in die Substanz der Abdeckfolie (4) eingepresste bzw. eingeschoßene Elemente sind.

4. Dichtleiste (1') nach einem der vorangegangenen Ansprüche 1 bis 3 **gekennzeichnet durch** eine, die Sichtfläche bildende, aus Gummi oder einem sonstigen Elastomer bestehende Schicht (2) und eine, aus Acrylschaum bestehende Schicht (3) die mit einer, mit Acrylschaum nicht verklebbaren Abdeckfolie (4) belegt ist.

5. Dichtleiste (1') nach einem der vorangegangenen Ansprüche 1 bis 4 **gekennzeichnet durch** eine lineare Gestalt.

6. Dichtleiste nach einem der vorangegangenen Ansprüche 1 bis 4, **gekennzeichnet durch** eine, nach Art einer geschlossenen Kurve eingerichtete Gestalt.

## Claims

1. Sealing strip (1') for sealing the gap between two parts which are movable relative to each other, in particular the gap between a motor vehicle door and the edge of the vehicle structure allocated thereto, having a surface (5') which is intended to adhere to one of the two parts, and a surface (5) which is intended in the closed position to lie in a sealing manner against the other one of the two parts and otherwise constitutes a visible surface (5), consisting at least of one layer (2) which forms the visible surface and whose side remote from the surface (5) is coated with a layer (3) of adhesive which for its part is covered with a cover sheet (4) which keeps the adhesive in an active state, can be removed from the adhesive and in particular cannot be adhered thereto, and wherein the cover sheet (4) has at least one auxiliary means attached to it which is intended to remove the cover sheet manually from the layer (3), **characterised in that** the auxiliary means is formed from at least one tear-thread (7) which passes through only the substance of the cover sheet (4) and is connected thereto and whose at least one free end protrudes from the sealing strip (1').

2. Sealing strip (1') as claimed in claim 1, **characterised in that** both ends of the tear-thread (7) protrude from the substance of the cover sheet (4) and are provided with planar holding elements (8, 8') on their ends or portions which protrude from the substance.

3. Sealing strip (1') as claimed in claim 1 or 2, **characterised in that** the tear-threads (7) are elements which consist of synthetic material and are pressed or shot into the substance of the cover sheet (4).

4. Sealing strip (1') as claimed in any one of the preceding claims 1 to 3, **characterised by** a layer (2) which forms the visible surface and consists of rubber or other elastomer, and by a layer (3) which consists of acrylic foam and is covered with a cover sheet (4) which cannot be adhered to acrylic foam.

5. Sealing strip (1') as claimed in any one of the preceding claims 1 to 4, **characterised by** a linear shape.

6. Sealing strip as claimed in any one of the preceding claims 1 to 4, **characterised by** a shape arranged in the manner of a closed curve.

## Revendications

1. Baguette d'étanchéité (1') pour assurer l'étanchéité de la fente entre deux pièces mobiles l'une par rapport à l'autre, en particulier la fente entre une porte de véhicule automobile et la bordure associée à cette porte d'une structure de véhicule automobile, comportant une surface (5') destinée à être collée à l'une des deux pièces, ainsi qu'une surface (5) destinée, dans la position de fermeture, à assurer un contact étanche contre l'autre des deux pièces et représentant, d'autre part, une surface visible, constituée au moins d'une couche (2) formant la surface visible, dont le côté opposé à la surface (5) est enduit d'une couche (3) en produit adhésif, qui, de son côté, est recouverte avec une feuille de recouvrement (4) maintenant le produit adhésif en état d'activité, séparable de celui-ci, en particulier, ne pouvant pas coller avec lui, et au moins un moyen auxiliaire étant fixé à la feuille de recouvrement (4) pour effectuer manuellement sa séparation manuelle d'avec la couche (3),
**caractérisée en ce que** le moyen auxiliaire est constitué d'au moins un brin déchirable (7) traversant simplement la substance de la feuille de recouvrement (4) en étant relié à celle-ci, et dont au moins une extrémité libre dépasse de la baguette d'étanchéité (1').

2. Baguette d'étanchéité (1') suivant la revendication 1, **caractérisée en ce que** les deux extrémités du brin déchirable (7) dépassent de la substance de la feuille de recouvrement (4) et sont munies, à leurs extrémités ou sur elles, de parties dépassant de la substance et comportant des organes de saisie plans (8, 8').

3. Baguette d'étanchéité suivant la revendication 1 ou 2, **caractérisée en ce que** les brins déchirables (7) sont des éléments constitués de matière plastique, incrustés ou enfoncés à force dans la substance de la feuille de recouvrement (4).

4. Baguette d'étanchéité suivant l'une des revendications précédentes 1 à 3, **caractérisée par** une couche (2) formant la couche visible, constituée de caoutchouc ou d'un élastomère quelconque, et par une couche (3) constituée de mousse acrylique, qui est recouverte avec une feuille de recouvrement (4) non collante avec la mousse acrylique.

5. Baguette d'étanchéité suivant l'une des revendications précédentes 1 à 4, **caractérisée par** une forme linéaire.

6. Baguette d'étanchéité suivant l'une des revendications précédentes 1 à 4, **caractérisée par** une forme conçue à la manière d'une courbe.
